# EUROPEAN PATENT APPLICATION

(11) **EP 4 793 402 A1**
(43) Date of publication of application: **19.08.2026**
(21) Application number: 24876989.5
(22) Date of filing: 13.09.2024
(51) Int. Cl.: C23C 2/12, C21D 1/18, C21D 9/46, C22C 21/00, C22C 21/10, C22C 30/00, C22C 38/00, C22C 38/60, C23C 2/06, C23C 2/26

(54) **HOT-STAMP MOLDED BODY**

(30) Priority: 12.10.2023 JP 2023176638
(71) Applicant: Nippon Steel Corporation, Tokyo 100-8071 (JP)
(72) Inventor: HAYASHIDA, Shota, Tokyo 100-8071 (JP); MITSUNOBU, Takuya, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2024/032828
(87) International publication number: WO 2025/079390

(57) **Abstract**

Provided is a hot-stamp formed body comprising a steel base material and a plating layer arranged on a surface of the steel base material, wherein the plating layer has a predetermined chemical composition, and includes, in order from the side of the steel base material, an Fe₂ Al₅ phase and a Fe-Al phase having an Fe content of 20 to 40 mass%, a Zn content of the Fe-Al phase is 1.5 to 15.0 mass%, at a cross-section of the plating layer, an Si content in the Fe₂ Al₅ phase is 5 to 20 mass% and projected lengths Lᵢ of Fe-Al-Si phases with a circle equivalent diameter of 2 µm or more and a length L₀ of the surface of the steel base material satisfy ΣLᵢ /L₀ ≤0.70, and an amount of deposition of the plating layer is 20 g/m² or more per side.

## Description

### FIELD

The present invention relates to a hot-stamp formed body.

### BACKGROUND

In recent years, in the auto industry, lighter weight of car bodies has been sought from the viewpoint of improvement of fuel efficiency. To achieve both lighter weight of car bodies and collision safety, one effective method has been increasing the strength of the steel sheet used in frame parts, etc. From such a background, high strength steel sheet is being developed.

Hot stamping (hot pressing) is known as a technique for press-forming a material, which is difficult to form, such as a high strength steel sheet. Hot stamping is a technique of hot forming which heats then forms a material to be formed. This technique heats then forms the material, and therefore at the time of forming, the steel material is soft and has good formability. Therefore, even a high strength steel material can be formed into a complex shape with a good precision. Further, it is hardened at the same time as being formed by the press dies, and therefore a formed steel material is known to have sufficient strength.

In relation to this, hot-stamp formed bodies given plating containing Al and plated steel sheets for hot-stamp formed body have been studied from various angles.

For example, PTL 1 describes a steel sheet containing 2.0 to 24.0 wt% of zinc, 7.1 to 12.0 wt% of silicon, optionally 1.1 to 8.0 wt% of magnesium, and optionally an additional element selected from Pb, Ni, Zr, or Hf, having a weight content of any additional element lower than 0.3 wt%, having a balance of aluminum and any unavoidable impurities and residual elements, and covered by a metal coating with an Al/Zn ratio of more than 2.9. Further, PTL 1 teaches that a metal coating with an Al/Zn ratio of more than 2.9 has a high sacrificial corrosion protective action.

PTL 2 describes an aluminum alloy plated steel sheet comprising a base steel sheet and an aluminum alloy plating layer formed on the base steel sheet, in which the aluminum alloy plating layer contains, by wt%, Zn: 21 to 35%, Si: 1 to 6.9%, Fe: 2 to 12%, and a balance of Al and other unavoidable impurities. Further, PTL 2 teaches that by controlling the Al/(Zn+Si) of the aluminum alloy plating layer to 1.3 to 2.6, it is possible to secure weldability and corrosion resistance.

### [CITATION LIST]

### [PATENT LITERATURE]

[PTL 1] Japanese Unexamined Patent Publication No. 2018-528324
[PTL 2] Japanese Unexamined Patent Publication No. 2022-550142

### SUMMARY

### [TECHNICAL PROBLEM]

For example, if using a plated steel sheet such as described in PTLs 1 and 2, more specifically a plated steel sheet containing a relatively large amount of Al as a constituent in the plating layer, in hot-stamp forming, sometimes at the time of heating in the hot-stamp forming, the plating layer and base iron (base steel sheet) become alloyed resulting in a drop in corrosion resistance.

Therefore, the present invention has as its object the provision of a hot-stamp formed body provided with a plating layer containing Al having improved corrosion resistance even after hot-stamp forming.

### [SOLUTION TO PROBLEM]

The inventors studied how to achieve the above object and as a result discovered that by forming a plating layer comprised of an Al-Zn-Si-based plating in a predetermined amount or more of deposition and suitably controlling the chemical composition and/or form of an Fe₂ Al₅ phase in the plating layer formed after hot-stamp forming and the Fe-Al phase formed on the Fe₂ Al₅ phase and having a relatively lower Fe content, it is possible to achieve excellent corrosion resistance in a hot-stamp formed body and thereby completed the present invention.

The present invention able to achieve the above object is as follows:
(1) A hot-stamp formed body comprising a steel base material and a plating layer arranged on a surface of the steel base material, wherein
   a chemical composition of the plating layer comprises, by mass%,
   Zn: 2.5 to 40.0%,
   Si: 0.05 to 15.0%,
   Fe: 25.0 to 40.0%,
   Ni: 0 to 0.500%,
   Mg: 0 to 3.000%,
   Ca: 0 to 3.000%,
   Sb: 0 to 0.500%,
   Pb: 0 to 0.500%,
   Cu: 0 to 1.000%,
   Sn: 0 to 1.000%,
   Ti: 0 to 1.000%,
   Cr: 0 to 1.000%,
   Nb: 0 to 1.000%,
   Zr: 0 to 1.000%,
   Mn: 0 to 1.000%,
   Mo: 0 to 1.000%,
   Ag: 0 to 1.000%,
   Li: 0 to 1.000%,
   La: 0 to 0.500%,
   Ce: 0 to 0.500%,
   B: 0 to 0.500%,
   Y: 0 to 0.500%,
   Sr: 0 to 0.500%,
   In: 0 to 0.500%,
   Co: 0 to 0.500%,
   Bi: 0 to 0.500%,
   P: 0 to 0.500%,
   W: 0 to 0.500%, and
   balance: Al and impurities, and
   a total content of Ni, Mg, Ca, Sb, Pb, Cu, Sn, Ti, Cr, Nb, Zr, Mn, Mo, Ag, Li, La, Ce, B, Y, Sr, In, Co, Bi, P, and W is 5.000% or less,
   the plating layer includes, in order from the side of the steel base material, an Fe₂ Al₅ phase and a Fe-Al phase having an Fe content of 20 to 40 mass%,
   a Zn content of the Fe-Al phase is 1.5 to 15.0 mass%,
   at a cross-section of the plating layer, an Si content in the Fe₂ Al₅ phase is 5 to 20 mass% and projected lengths Lᵢ of Fe-Al-Si phases with a circle equivalent diameter of 2 µm or more and a length L₀ of the surface of the steel base material satisfy ΣLᵢ /L₀ ≤0.70, and
   an amount of deposition of the plating layer is 20 g/m² or more per side.
(2) A hot-stamp formed body according to the above (1), wherein the chemical composition of the plating layer comprises, by mass%,
   Zn: 5.0 to 35.0%, and
   Si: 0.25 to 6.0%, and
   the Zn content of the Fe-Al phase is 3.0 to 15.0 mass%.
(3) A hot-stamp formed body according to the above (1) or (2), wherein ΣLᵢ /L₀ ≤0.50.

### [ADVANTAGEOUS EFFECTS OF INVENTION]

According to the present invention, it is possible to provide a hot-stamp formed body provided with a plating layer containing Al having improved corrosion resistance even after hot-stamp forming.

### BRIEF DESCRIPTION OF DRAWINGS

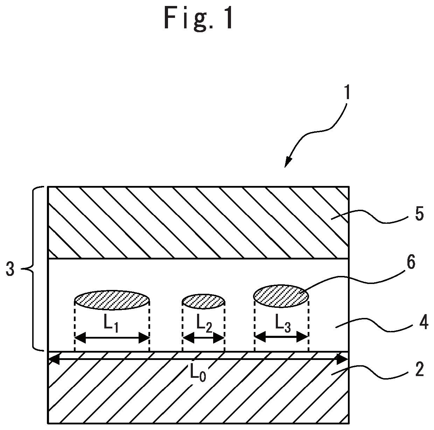

FIG. 1 is one example of a schematic cross-sectional view of a part of the surface of a hot-stamp formed body according to an embodiment of the present invention and shows projected lengths Lᵢ of Fe-Al-Si phases and length L₀ of the surface of the steel base material.

### DESCRIPTION OF EMBODIMENTS

### <Hot-Stamp Formed Body>

The hot-stamp formed body according to an embodiment of the present invention comprises a steel base material and a plating layer arranged on a surface of the steel base material, wherein
a chemical composition of the plating layer comprises, by mass%,
Zn: 2.5 to 40.0%,
Si: 0.05 to 15.0%,
Fe: 25.0 to 40.0%,
Ni: 0 to 0.500%,
Mg: 0 to 3.000%,
Ca: 0 to 3.000%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%,
W: 0 to 0.500%, and
balance: Al and impurities, and
a total content of Ni, Mg, Ca, Sb, Pb, Cu, Sn, Ti, Cr, Nb, Zr, Mn, Mo, Ag, Li, La, Ce, B, Y, Sr, In, Co, Bi, P, and W is 5.000% or less,
the plating layer includes, in order from the side of the steel base material, an Fe₂ Al₅ phase and a Fe-Al phase having an Fe content of 20 to 40 mass%,
a Zn content of the Fe-Al phase is 1.5 to 15.0 mass%,
at a cross-section of the plating layer, an Si content in the Fe₂ Al₅ phase is 5 to 20 mass% and projected lengths Lᵢ of Fe-Al-Si phases with a circle equivalent diameter of 2 µm or more and a length L₀ of the surface of the steel base material satisfy ΣLᵢ /L₀ ≤0.70, and
an amount of deposition of the plating layer is 20 g/m² or more per side.

As stated previously, if using a plated steel sheet containing a relatively large amount of Al as a constituent in the plating layer in hot-stamp forming, at the time of heating in the hot-stamp forming, sometimes the plating layer and base iron (base steel sheet) become alloyed and due to this the corrosion resistance falls. Explained in more detail, for example, if hot-stamp forming a plated steel sheet provided with a plating layer comprised of a conventional Al-Si-based plating, at the time of high temperature heating in hot-stamp forming (for example, at the time of heating at about 900°C or a temperature higher than that), the plating layer and the base steel sheet become alloyed and a plating layer containing mainly an Fe₂ Al₅ phase is formed after the hot-stamp forming. However, in the plating layer, other than an Fe₂ Al₅ phase, sometimes an Fe-Al-based intermetallic compound containing a relatively large amount of Si, in particular Fe-Al-Si phases containing 5 mass% or more of Si, is also formed in a relatively large amount. In such a case, sometimes dissimilar metal corrosion (galvanic corrosion) occurs between the Fe₂ Al₅ phase and Fe-Al-Si phases. The corrosion resistance of the hot-stamp formed body falls as a result.

Therefore, the inventors engaged in studies so as to provide a hot-stamp formed body provided with a plating layer containing Al having excellent corrosion resistance even after hot-stamp forming, in particularly focusing on the chemical composition and form of the plating layer comprised of an Al-Si-based plating before hot-stamp forming. As a result, the inventors discovered that by suitably building in a plating layer comprised of an Al-Zn-Si-based plating of an Al-Si-based plating plus further Zn and suitably selecting the heat treatment conditions after hot-stamp forming, it is possible to suppress the formation of Fe-Al-Si phases able to cause galvanic corrosion with the Fe₂ Al₅ phase at the plating layer formed after hot-stamp forming and further possible to make Zn with its sacrificial corrosion preventive action sufficiently dissolve in the Fe-Al phase formed on the Fe₂ Al₅ phase and having a relatively low Fe content and thereby possible to realize excellent corrosion resistance in a body after hot-stamp forming.

More specifically, first, the inventors discovered that by making the amount of deposition of a plating layer comprised of an Al-Zn-Si-based plating 20 g/m² or more per side and further suitably selecting the heat treatment conditions of the hot-stamp forming, it is possible to form an Fe-Al phase with a lower Fe content than the Fe₂ Al₅ phase of the steel base material side on that Fe₂ Al₅ phase without the overall plating layer becoming alloyed to an Fe₂ Al₅ phase at the time of high temperature heating in the hot-stamp forming. Explained more specifically, at the time of high temperature heating at hot-stamp forming, Fe from the steel base material diffuses into the plating layer and becomes alloyed with Al, but by making the amount of deposition of the plating layer relatively larger and suitably weakening the extent of alloying, while a sufficiently alloyed Fe₂ Al₅ phase is formed at the steel base material side of the plating layer, it becomes possible to form an Fe-Al phase with a lower Fe content than the Fe₂ Al₅ phase, i.e., an Fe-Al phase having an Fe content of 20 to 40 mass%, at the surface side of the plating layer.

Next, the inventors, as explained in detail later relating to the method of production of a hot-stamp formed body, discovered that by making the Fe-Al phase corresponding to the interfacial alloy layer formed at the interface of the base steel sheet and plating layer before hot-stamp forming contain Si and Zn in predetermined amounts, more specifically making the interfacial alloy layer contain Si in 3.0 mass% or more and Zn in 2.0 mass% or more and controlling the shape of the interfacial alloy layer to a flatter shape with less roughness, in the plating layer formed after hot-stamp forming, it is possible to suppress the formation of relatively large Fe-Al-Si phases in the Fe₂ Al₅ phase and enable sufficient dissolution of Zn in the Fe-Al phase having an Fe content of 20 to 40 mass%. More specifically, the inventors discovered that by establishing the presence of relatively large Fe-Al-Si phases dispersed in the Fe₂ Al₅ phase formed at the steel base material side of the plating layer in the plating layer after hot-stamp forming, i.e., by controlling the projected lengths Lᵢ of Fe-Al-Si phases with an Si content of 5 to 20 mass% and a circle equivalent diameter of 2 µm or more and the length L₀ of the surface of the steel base material so as to satisfy ΣLᵢ /L₀ ≤0.70, it is possible to remarkably improve the corrosion resistance of the plating layer after hot-stamp forming.

FIG. 1 is one example of a cross-sectional schematic view of a surface part at a hot-stamp formed body according to an embodiment of the present invention and shows projected lengths Lᵢ of Fe-Al-Si phases and a length L₀ of the surface of the steel base material. Referring to FIG. 1, the hot-stamp formed body 1 according to an embodiment of the present invention is provided with a steel base material 2 and a plating layer 3 arranged on a surface of the steel base material 2. The plating layer 3, in order from the steel base material 2 side, includes a Fe₂ Al₅ phase 4 positioned on the steel base material 2 and an Fe-Al phase 5 positioned on the Fe₂ Al₅ phase 4, more specifically, an Fe-Al phase 5 having an Fe content of 20 to 40 mass%. Further, in FIG. 1, in the Fe₂ Al₅ phase 4, there are Fe-Al-Si phases 6 with an Si content of 5 to 20 mass% and a circle equivalent diameter of 2 µm or more present. Here, the total ΣLᵢ (in FIG. 1, ΣLᵢ =L₁ +L₂ +L₃) of the projected lengths of the Fe-Al-Si phases 6 projected on the surface of the steel base material and the length L₀ of the surface of the steel base material 2 satisfy ΣLᵢ /L₀ ≤0.70. Therefore, relatively large Fe-Al-Si phases 6 are present dispersed in the Fe₂ Al₅ phase 4. If the projected lengths of the plurality of Fe-Al-Si phases 6 partially overlap, the projected length as a whole including the overlapped parts is determined as a single projected length. Even if there are Fe-Al-Si phases 6 present in the Fe₂ Al₅ phase 4 in a layer shape, if galvanic corrosion occurs at the contact parts of the layer shaped Fe-Al-Si phases 6 and the Fe₂ Al₅ phase 4, it may be that corrosion will progress along the contact interfaces. As a result, the corrosion resistance of the plating layer 3 will greatly fall. As opposed to this, in the hot-stamp formed body 1 according to an embodiment of the present invention, due to the presence of Fe-Al-Si phases 6 dispersed in the Fe₂ Al₅ phase 4 so as to satisfy ΣLᵢ /L₀ ≤0.70, even if galvanic corrosion were to occur at the contact part of one or more Fe-Al-Si phases 6 and the Fe₂ Al₅ phase 4 present around them, corrosion would never progress to other Fe-Al-Si phases 6 starting from corrosion at that contact part. Therefore, the corrosion resistance of the plating layer 3 can be remarkably improved. In addition, in the hot-stamp formed body 1 according to an embodiment of the present invention, by making the Fe-Al phase 5 contain Zn in 1.5 to 15.0 mass%, it is possible to make the sacrificial corrosion preventive action of Zn be effectively exhibited and thereby possible to remarkably improve the corrosion resistance, in particular the red rust resistance.

Therefore, according to the hot-stamp formed body according to an embodiment of the present invention, formation of Fe-Al-Si phases 6 able to cause galvanic corrosion with the Fe₂ Al₅ phase 4 is suppressed, more specifically by combination of the effect of suppression of progression of corrosion obtained by the formation of relatively large Fe-Al-Si phases 6 dispersed and the effect of improvement the corrosion resistance obtained by dissolution of Zn in the Fe-Al phase 5, it becomes possible to realize excellent corrosion resistance. In particular, the fact that by comprising the plating layer 3 by an Fe₂ Al₅ phase 4 and an Fe-Al phase 5 having a relatively low Fe content and further by suitably controlling the chemical compositions and/or forms of the Fe₂ Al₅ phase 4 and Fe-Al phase 5, it is possible to improve the corrosion resistance of the hot-stamp formed body 1 was first made clear by the inventors this time. Therefore, the hot-stamp formed body according to an embodiment of the present invention is particularly useful in utilization in the automobile field where hot-stamp forming is relatively often applied.

Below, a hot-stamp formed body according to an embodiment of the present invention will be explained in more detail. In the following explanation, the units "%" of contents of the elements, unless particularly indicated otherwise, mean "mass%". Further, in this Description, the "to" showing a numerical range, unless particularly indicated otherwise, is used in the sense including the numerical values described before and after it as a lower limit value and an upper limit value.

### [Plating Layer]

According to an embodiment of the present invention, the plating layer is arranged on the surface of the steel base material. For example, it is arranged on at least one surface, preferably on both, of the steel base material. Here, the expression of "arranged on the surface of the steel base material" includes not only the case where the plating layer is directly arranged on the surface of the steel base material, but also the case where the plating layer is indirectly arranged on the surface of the steel base material, for example, the case of including a solid solution layer, etc., explained later between the steel base material and the plating layer. The plating layer as the following chemical composition.

### [Zn: 2.5 to 40.0%]

Zn has a sacrificial corrosion preventive action and is an element effective for improving the corrosion resistance of the plating layer. To sufficiently obtain such an effect, the Zn content is 2.5% or more. The Zn content may also be 3.5% or more, 5.0% or more, 8.0% or more, 10.0% or more, 12.0% or more, 15.0% or more, 18.0% or more, 20.0% or more, or 22.0% or more. On the other hand, if excessively containing Zn, the melting of Zn at the time of high temperature heating of the hot-stamp forming becomes remarkable and sometimes the melted Zn penetrates the steel and triggers liquid metal embrittlement (LME) cracking. Therefore, the Zn content is 40.0% or less. The Zn content may also be 38.0% or less, 35.0% or less, 32.0% or less, 30.0% or less, or 28.0% or less.

### [Si: 0.05 to 15.0%]

Si is an element effective for improving the adhesion of the plating layer. To sufficiently obtain such an effect, the Si content is 0.05% or more. The Si content may also be 0.1% or more, 0.2% or more, 0.25% or more, 0.3% or more, 0.5% or more, 0.8% or more, 1.0% or more, 3.0% or more, or 5.0% or more. On the other hand, if excessively containing Si, sometimes Fe-Al-Si phases are remarkably formed in the Fe₂Al₅ phase and the corrosion resistance falls. Therefore, the Si content is 15.0% or less. The Si content may also be 12.0% or less, 10.0% or less, 8.0% or less, or 6.0% or less.

### [Fe: 25.0 to 40.0%]

If heating the plated steel sheet at the time of hot-stamp forming, Fe from the steel base material diffuses into the plating layer and becomes alloyed with the Al, etc., therefore the plating layer inevitably contains Fe. Therefore, the Fe content is 25.0% or more. For example, it may also be 26.0% or more, 28.0% or more, 30.0% or more, or 32.0% or more. On the other hand, if the Fe content becomes too high, sometimes the red rust resistance falls due to excessive alloying of the plating layer. Therefore, the Fe content is 40.0% or less. For example, it may also be 38.0% or less, 36.0% or less, or 34.0% or less.

Furthermore, the plating layer may optionally contain at least one of Ni: 0 to 0.500%, Mg: 0 to 3.000%, Ca: 0 to 3.000%, Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500%, and W: 0 to 0.500%. The total content of these optional elements (i.e., the total of the contents of these elements) is 5.000% or less. The total content of the optional elements may also be 4.500% or less, 4.000% or less, 3.500% or less, 3.000% or less, 2.500% or less, 2.000% or less, 1.500% or less, 1.000% or less, 0.800% or less, 0.500% or less, 0.100% or less, or 0.050% or less. Inclusion of these elements is not essential. The total of the contents of these elements may also be 0%. In accordance with need, the lower limit of the total of the contents of these elements may also be 0.001%, 0.010%, 0.050%, or 0.080%. Below, these optional elements will be explained in detail.

### [Ni: 0 to 0.500%]

Ni is an element effective for improving the corrosion resistance of the plating layer. The Ni content may also be 0%, but to obtain such an effect, the Ni content is preferably 0.001% or more. The Ni content may also be 0.003% or more, 0.005% or more, 0.008% or more, 0.010% or more, or 0.020% or more. The upper limit is not particularly prescribed, but from the viewpoint of production costs, the Ni content is 0.500% or less. For example, it may be 0.400% or less, 0.300% or less, 0.100% or less, 0.050% or less, or 0.030% or less.

### [Mg: 0 to 3.000%]

Mg is an element effective for improving the corrosion resistance of the plating layer. The Mg content may also be 0%, but to obtain such an effect, the Mg content is preferably 0.001% or more. The Mg content may also be 0.003% or more, 0.005% or more, or 0.010% or more. On the other hand, from the viewpoint of improvement of the workability, the Mg content may be 3.000% or less. The Mg content may be 2.000% or less, 1.000% or less, 0.500% or less, 0.300% or less, 0.100% or less, 0.050% or less, or 0.020% or less.

### [Ca: 0 to 3.000%]

Ca is an element effective for securing the wettability of the plating bath. The Ca content may also be 0%, but to obtain such an effect, the Ca content is preferably 0.001% or more. The Ca content may also be 0.003% or more, 0.005% or more, or 0.010% or more. On the other hand, if excessively containing Ca, sometimes hard intermetallic compounds are formed in a large amount in the plating layer, the plating layer becomes brittle, and the adhesion with the steel sheet is made to fall. Therefore, the Ca content is preferably 3.000% or less. The Ca content may be 2.000% or less, 1.000% or less, 0.500% or less, 0.300% or less, 0.100% or less, 0.050% or less, or 0.020% or less.

### [Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500% and W: 0 to 0.500%]

Sb, Pb, Cu, Sn, Ti, Cr, Nb, Zr, Mn, Mo, Ag, Li, La, Ce, B, Y, Sr, In, Co, Bi, P, and W need not be contained in the plating layer, but can be present in the plating layer in an amount of 0.0001% or more, 0.001% or more, or 0.01% or more. These elements do not have any detrimental effect on the performance of the hot-stamp formed body if within predetermined ranges of content. However, if the content of any element is excessive, sometimes the corrosion resistance is made to fall. Therefore, the contents of Sb, Pb, La, Ce, B, Y, Sr, In, Co, Bi, P, and W are preferably 0.500% or less. For example, they may be 0.300% or less, 0.100% or less, 0.050% or less, or 0.020% or less. Similarly, the contents of Cu, Sn, Ti, Cr, Nb, Zr, Mn, Mo, Ag, and Li are preferably 1.000% or less. For example, they may be 0.800% or less, 0.500% or less, 0.100% or less, 0.050% or less, or 0.020% or less.

In the plating layer, the balance besides the above elements is comprised of Al and impurities. The "impurities in the plating layer" are constituents, etc., entering due to various factors in the production process such as the raw materials when producing the plating layer. Note that there is no need to particularly prescribe the Al content, but it may be 10.0 to 72.45%. If necessary, the Al content may also be 20.0% or more, 25.0% or more, 30.0% or more, 35.0% or more, 38.0% or more, 40.0% or more, or 42.0% or more and may also be 70.0% or less, 65.0% or less, 60.0% or less, 57.0% or less, 54.0% or less, 51.0% or less, or 48.0% or less.

### [Measurement of Chemical Composition of Plating Layer]

The chemical composition of the plating layer is determined by dissolving only the plating layer in an acidic aqueous solution and chemically analyzing it. That is, the plating layer is dissolved by an acidic aqueous solution containing an inhibitor inhibiting dissolution of the steel, for example, an acidic aqueous solution of room temperature comprised of 10% hydrochloric acid plus 0.04% of ibit 710K (made by Asahi Chemical Industry Co., Ltd.)The obtained acidic aqueous solution is analyzed by ICP (inductively coupled plasma-atomic emission spectrometry) to obtain the chemical composition of the plating layer.

### [Fe₂ Al₅ Phase]

### [ΣLᵢ /L₀ ≤0.70]

In an embodiment of the present invention, the plating layer includes an Fe₂ Al₅ phase at the steel base material side. The Si content in the Fe₂ Al₅ phase is 5 to 20 mass% and the projected lengths Lᵢ of the Fe-Al-Si phases with a circle equivalent diameter of 2 µm or more and a length L₀ of the surface of the steel base material are controlled to satisfy ΣLᵢ /L₀ ≤0.70. As explained above, the Fe-Al-Si phases with an Si content of 5 to 20 mass% can cause galvanic corrosion with the Fe₂ Al₅ phase. In particular, if the Fe-Al-Si phases are relatively large and are continuously present in a layer state or state close to a layer state, corrosion progresses along the contact interfaces of the Fe-Al-Si phases and Fe₂ Al₅ phase and the corrosion resistance greatly falls. For this reason, to suppress progression of such corrosion and raise the corrosion resistance of the plating layer, it becomes necessary to establish the presence of Fe-Al-Si phases with a circle equivalent diameter of 2 µm or more dispersed in the Fe₂ Al₅ phase. Therefore, in an embodiment of the present invention, as shown in FIG. 1, by establishing the presence of Fe-Al-Si phases dispersed in the Fe₂ Al₅ phase so that the total ΣLᵢ of the projected lengths Lᵢ of the Fe-Al-Si phases with a circle equivalent diameter of 2 µm or more projected on the surface of the steel base material and length L₀ of the surface of the steel base material 2 satisfy ΣLᵢ /L₀ ≤0.70, the corrosion resistance of the plating layer is improved. From the viewpoint of further enhancing the effect of improvement of the corrosion resistance, the lower the value of ΣLᵢ /L₀ , the more preferable. For example, it may be 0.65 or less, 0.60 or less, 0.55 or less, 0.50 or less, 0.45 or less, or 0.40 or less.

On the other hand, in Fe-Al-Si phases with a circle equivalent diameter of less than 2 µm, even if corrosion occurs, the corrosion will never further progress to other Fe-Al-Si phases starting from the corrosion. For this reason, even if Fe-Al-Si phases with a circle equivalent diameter of less than 2 µm is present, this will not necessarily act disadvantageously on the corrosion resistance of the hot-stamp formed body. In relation to this, from the viewpoint of further improvement of the corrosion resistance, Fe-Al-Si phases with a circle equivalent diameter of 2 µm or more may be kept from being present in the Fe₂ Al₅ phase. That is, the lower limit of ΣLᵢ /L₀ may be 0. While not particularly limited, for example, ΣLᵢ /L₀ may be 0.05 or more, 0.10 or more, 0.15 or more, or 0.20 or more.

### [Fe-Al Phase Having Fe Content of 20 to 40 Mass%]

### [Zn Content of Fe-Al Phase: 1.5 to 15.0 Mass%]

In an embodiment of the present invention, at the surface side, the plating layer contains an Fe-Al phase with an Fe content lower than the Fe₂ Al₅ phase (Fe content: more than 40 to 60 mass%), i.e., an Fe-Al phase having an Fe content of 20 to 40 mass%. The Zn content of the Fe-Al phase is 1.5 to 15.0 mass%. The Fe-Al phase having an Fe content of 20 to 40 mass% is lower in extent of alloying compared with the Fe₂ Al₅ phase and in turn can contribute to improvement of the red rust resistance. The Si content in the Fe-Al phase is less than 5 mass%. Note that in this Description, the Fe-Al phase having an Fe content of 20 to 40 mass% will sometimes be referred to as the "Fe-Al phase". In an embodiment of the present invention, by including Zn having a sacrificial corrosion preventive action in the Fe-Al phase in an amount of 1.5 mass% or more, it becomes possible to remarkably improve the corrosion resistance of the plating layer, in particular the red rust resistance. From the viewpoint of further enhancing the effect of improvement of the corrosion resistance, the higher the Zn content of the Fe-Al phase, the more preferable. For example, it may be 3.0 mass% or more, 4.0 mass% or more, 5.0 mass% or more, 6.0 mass% or more, or 8.0 mass% or more. On the other hand, even if including much more Zn in the Fe-Al phase, the effect becomes saturated and a rise in the production costs is liable to be invited. Therefore, the Zn content of the Fe-Al phase is 15.0 mass% or less. For example, it may also be 12.0 mass% or less, 10.0 mass% or less, or 8.0 mass% or less.

The plating layer may also have an oxide film at least at part of its surface due to being exposed to the high temperature of the hot-stamp forming.

### [Analysis of Plating Layer]

The plating layer is analyzed in the following way. First, to enable a cross-section of the plating layer to be examined, five samples are taken from the hot-stamp formed body. Next, for each sample, a rectangular range of 80 µm in the thickness direction and 100 µm in the direction perpendicular to the thickness direction is defined as one field. A total of five fields for the five samples are photographed using an SEM-EDS or EPMA at a power of 1500X to obtain mapping images. From the elemental distribution maps of the mapping images, the positions of the Fe-Al phase having an Fe content of 20 to 40 mass% and the Fe₂ Al₅ phase and Fe-Al-Si phases with an Si content of 5 to 20 mass% and a circle equivalent diameter of 2 µm or more present inside the Fe₂ Al₅ phase are determined. More specifically, elemental distribution maps are obtained by SEM-EDS or EPMA for the measured elements of Fe, Al, Si, and Zn. In the elemental distribution maps, a region satisfying Fe: 20 to 40 mass% and Al: 58 to 78 mass% is defined as the Fe-Al phase having an Fe content of 20 to 40 mass%. For the region of the Fe-Al phase, the concentrations of the elements in the elemental distribution maps are shown by colors of color bars. The ranges of concentration of the color bars are set to Fe: 20 to 40 mass% and Al: 58 to 78 mass%, and the elemental distribution maps of Fe and Al adjusted in color bars are superposed to identify the Fe-Al phase having an Fe content of 20 to 40 mass% (notation 5 in FIG. 1) . In this elemental distribution maps, a region satisfying Fe: more than 40 to 60 mass%, Al: 40 to less than 60 mass%, Si: 0 to less than 5 mass%, and Zn: 0 to less than 15 mass% is defined as Fe₂ Al₅ phase (notation 4 in FIG. 1). A region with an Si content of 5 to 20 mass% and a circle equivalent diameter of 2 µm or more in which the region is surrounded by an Fe₂ Al₅ phase is defined as a Fe-Al-Si phase (notation 6 in FIG. 1). Next, the Fe-Al-Si phases are projected on the surface of the steel base material using image analysis software (for example, the "Analyze" function of "ImageJ") and the total of the projected lengths Li of the Fe-Al-Si phases (in FIG. 1, L₁ +L₂ +L₃ ) is calculated. Finally, the average of the total of the Lᵢ obtained for the five samples is calculated to obtain ΣLᵢ and the ratio ΣLᵢ /L₀ with the length L₀ of the surface of the corresponding steel base material (length of long side in each field: 100 µm) is calculated. Here, the length L₀ of the long side in the field, as shown in FIG. 1, is also the distance between the two ends of the measurement region (field) (however, distance in direction parallel to surface of hot-stamp formed body 1).

The Zn content in the Fe-Al phase having the Fe content of 20 to 40 mass% is determined in the following way. First, for each of the above five samples, the above method was used to identify the Fe-Al phases having an Fe content of 20 to 40 mass%, then SEM-EDS or EPMA is used to measure the elemental concentration forming the Fe-Al phases (specifically, the Zn content). More specifically, for each of the samples, the Zn contents at five measurement points at 50 µm intervals in the direction parallel to the surface of the hot-stamp formed body at the center thickness position of the Fe-Al phase are measured and the average value is made the measured value of the samples. The measured values of the five samples of the element concentration covered are found and the average value of the measured values is made the Zn content.

As the plating layer having the above chemical composition and Fe₂ Al₅ phase and Fe-Al phase, a hot dip coated layer is possible. There is no need to exclude plating layers other than hot dip coated layers, but the invention may also be limited to hot dip coated layers.

### [Amount of Deposition of Plating Layer: 20 g/m² or More Per Side]

In the hot-stamp formed body according to an embodiment of the present invention, the amount of deposition of the plating layer is 20 g/m² or more per side. In general, a plating layer sometimes becomes alloyed with the steel base material at the time of high temperature heating in hot-stamp forming and falls in corrosion resistance. However, according to an embodiment of the present invention, by making the amount of deposition of the plating layer relatively large, specifically making it 20 g/m² or more per side, while suitably weakening the degree of alloying, while a sufficiently alloyed Fe₂ Al₅ phase is formed at the steel base material side of the plating layer, it becomes possible to form an Fe-Al phase with a lower Fe content than the Fe₂ Al₅ phase, i.e., an Fe-Al phase having an Fe content of 20 to 40 mass%, at the surface side of the plating layer. Furthermore, by suitably controlling the chemical compositions and/or forms of these phases in the above way, it becomes possible to realize excellent corrosion resistance due to the presence of the obtained plating layer. On the other hand, if the amount of deposition of the plating layer is small, at the time of high temperature heating in the hot-stamp forming, alloying of the plating layer progresses too much and sometimes an Fe-Al phase having a relatively low Fe content can no longer be formed. In such a case, the effect of improvement of the red rust resistance due to the formation of the Fe-Al phase can no longer be obtained. In addition, if the amount of deposition of the plating layer is small, sometimes the effect of addition of Zn with its sacrificial corrosion preventive action into the plating layer can no longer be sufficiently obtained. In this case, the corrosion resistance after hot-stamp forming falls. From the viewpoint of improvement of the corrosion resistance, the amount of deposition of the plating layer is preferably, per side, 30 g/m² or more, 40 g/m² or more, or 50 g/m² or more, more preferably 60 g/m² or more, still more preferably 70 g/m² or more, most preferably 80 g/m² or more. The upper limit is not particularly prescribed, but the amount of position of the plating layer may also be 200 g/m² or less, 190 g/m² or less, 180 g/m² or less, or 170 g/m² or less.

### [Measurement of Amount of Deposition of Plating]

The amount of deposition of the plating layer is determined by dissolving only the plating layer by an acidic aqueous solution. That is, a sample of 30 mm×30 mm is taken from the hot-stamp formed body, the plating layer is dissolved by an acidic aqueous solution containing an inhibitor inhibiting dissolution of the steel, for example, an acidic aqueous solution of room temperature comprised of 10% hydrochloric acid plus 0.04% of ibit 710K (made by Asahi Chemical Industry Co., Ltd.). The amount of deposition of the plating layer is determined from the change in mass of the sample before and after dissolution of the plating layer.

### [Solid Solution Layer]

In an embodiment of the present invention, the hot-stamp formed body may further contain a solid solution layer between the steel base material and plating layer. Depending on the plating composition before hot-stamp forming and the hot stamp conditions, sometimes a solid solution is progressively formed between the Fe diffusing from the steel base material to the plating layer and the Al and/or Zn in the plating layer and, after hot-stamp forming, a solid solution layer including a solid solution of these elements is formed between the steel base material and plating layer. Therefore, if the hot-stamp formed body further includes a solid solution layer, the solid solution layer includes Fe and one or both of Al and Zn. More specifically, the solid solution layer includes an Fe-Al solid solution layer, Fe-Zn solid solution layer, and/or Fe-Al-Zn solid solution layer.

The presence of the solid solution layer can be confirmed as follows: First, an acidic aqueous solution containing an inhibitor inhibiting the dissolution of steel, specifically an acidic aqueous solution of room temperature comprised of 10% hydrochloric acid plus 0.04% of ibit 710K (made by Asahi Chemical Industry Co., Ltd.), is used to dissolve only the plating layer. Next, a high frequency glow discharge spectrometer (GDS) is used to render the surface of the hot-stamp formed body an Ar atmosphere and apply voltage to generate glow plasma. In that state, the surface of the hot-stamp formed body is sputtered while analyzing the composition in the depth direction. Further, the elements contained in the material are identified from the emission spectrum wavelengths unique to the elements emitted by excitation of atoms in the glow plasma and the emission intensities of the identified elements are estimated. The depth direction data can be estimated from the sputter time. Specifically, by using standard samples in advance to find the relationship between the sputter time and sputter depth, it is possible to convert the sputter time to the sputter depth. Therefore, the sputter depth converted from the sputter time can be defined as the depth from the surface of the material. The obtained emission intensity is converted to mass% by preparation of a calibration curve. If measuring the hot-stamp formed body by GDS in this way, the region in the depth direction where the Al concentration becomes more than 1.00 mass% and 1.10 times or more of the Al concentration of the steel base material is defined as the solid solution layer.

### [Preferable Chemical Composition of Steel Base Material]

The present invention, as explained above, has as its object the provision of a hot-stamp formed body provided with a plating layer containing Al having improved corrosion resistance even after hot-stamp forming and achieves this object by suitably setting the chemical composition and amount of deposition of a plating layer comprised of an Al-Zn-Si-based plating, controlling the projected lengths Lᵢ of the Fe-Al-Si phases with an Si content of 5 to 20 mass in the Fe₂ Al₅ phase formed at the steel base material side of the plating layer and with a circle equivalent diameter of 2 µm or more and the length L₀ of the surface of the steel base material so as to satisfy ΣLᵢ /L₀ ≤0.70, and further making the Fe-Al phase formed at the surface side of the plating layer contain Zn in 1.5 to 15.0 mass%. Therefore, it is clear that the chemical composition itself of the steel base material is not an essential technical feature in achieving the object of the present invention. Below, the preferable chemical composition of the steel base material used in the hot-stamp formed body according to an embodiment of the present invention will be explained in detail, but the explanations are intended to just illustrate the preferred chemical composition of the steel base material for the hot-stamp formed body and is not intended to limit the present invention to one using a steel base material having such a specific chemical composition.

In an embodiment of the present invention, for example, the steel base material preferably has a chemical composition comprising, by mass%,
C: 0.13 to 0.50%,
Si: 0.001 to 3.000%,
Mn: 0.30 to 3.00%,
Al: 0.0002 to 2.000%,
P: 0.100% or less,
S: 0.1000% or less,
N: 0.0100% or less,
Nb: 0 to 0.15%,
Ti: 0 to 0.15%,
V: 0 to 0.15%,
Mo: 0 to 1.0%,
Cr: 0 to 1.0%,
Cu: 0 to 1.0%,
Ni: 0 to 1.0%,
B: 0 to 0.0100%,
W: 0 to 1.000%,
Hf: 0 to 0.050%,
Mg: 0 to 0.050%,
Zr: 0 to 0.050%,
Ca: 0 to 0.010%,
REM: 0 to 0.30%,
Ir: 0 to 1.000%, and
balance: Fe and impurities.

Below, these elements will be explained in further detail.

### [C: 0.13 to 0.50%]

C is an element inexpensively making the tensile strength increase and an element important for controlling the strength of the steel. To sufficiently obtain such an effect, the C content is preferably 0.13% or more. The C content may also be 0.15% or more, 0.20% or more, 0.30% or more, or 0.35% or more. On the other hand, if excessively containing C, sometimes a drop in the elongation is invited. For this reason, the C content is preferably 0.50% or less. The C content may also be 0.45% or less or 0.40% or less.

### [Si: 0.001 to 3.000%]

Si is an element acting as a deoxidizing agent and suppressing the precipitation of carbides in the cooling process in annealing of the cold rolled steel sheet. To sufficiently obtain such an effect, the Si content is preferably 0.001% or more. The Si content may also be 0.010% or more, 0.100% or more, or 0.200% or more. On the other hand, if excessively containing Si, sometimes an increase in the steel strength and a drop in the elongation are invited. For this reason, the Si content is preferably 3.000% or less. The Si content may also be 2.500% or less, 2.000% or less, 1.500% or less, or 1.000% or less.

### [Mn: 0.30 to 3.00%]

Mn is an element raising the hardenability of the steel and an element effective for raising the strength. To sufficiently obtain such an effect, the Mn content is preferably 0.30% or more. The Mn content may also be 0.50% or more, 1.00% or more, or 1.30% or more. On the other hand, if excessively containing Mn, sometimes an increase in the steel strength and a drop in the elongation are invited. For this reason, the Mn content is preferably 3.00% or less. The Mn content may also be 2.80% or less, 2.50% or less, or 2.00% or less.

### [Al: 0.0002 to 2.000%]

Al acts as a deoxidizing agent of the steel and is an element having the action of making the steel sounder. To sufficiently obtain such an effect, the Al content is preferably 0.0002% or more. The Al content may also be 0.001% or more, 0.010% or more, 0.050% or more, or 0.100% or more. On the other hand, if excessively containing Al, sometimes coarse Al oxides are formed and the elongation of the steel sheet falls. For this reason, the Al content is preferably 2.000% or less. The Al content may also be 1.500% or less, 1.000% or less, 0.800% or less, or 0.500% or less.

### [P: 0.100% or Less]

P is an element segregating at the grain boundaries and promoting embrittlement of the steel. The smaller the P content, the more preferable, therefore ideally it is 0%. However, excessive reduction of the P content sometimes invites a great increase in the cost. For this reason, the P content may be 0.0001% or more and may also be 0.001% or more or 0.005% or more. On the other hand, if excessively including P, as explained above, due to grain boundary segregation, sometimes embrittlement of the steel is invited. Therefore, the P content is preferably 0.100% or less. The P content may also be 0.050% or less, 0.030% or less, or 0.010% or less.

### [S: 0.1000% or Less]

S is an element forming MnS and other nonmetallic inclusions in the steel and inviting a drop in ductility of the steel material part. The smaller the S content, the more preferable, therefore ideally it is 0%. However, excessive reduction of the content sometimes invites a large increase in costs. Therefore, the S content may be 0.0001% or more and may also be 0.0002% or more, 0.0010% or more, or 0.0050% or more. On the other hand, if excessively containing S, at the time of cold forming, sometimes occurrence of cracking starting from the nonmetallic inclusions is invited. Therefore, the S content is preferably made 0.1000% or less. The S content may also be 0.0500% or less, 0.0200% or less, or 0.0100% or less.

### [N: 0.0100% or Less]

N is an element forming coarse nitrides in the steel sheet and causing a drop in workability of the steel sheet. The smaller the N content, the more preferable, therefore ideally it is 0%. However, excessive reduction of the N content sometimes invites a large increase in production costs. For this reason, the N content may be 0.0001% or more and may also be 0.0005% or more or 0.0010% or more. On the other hand, if excessively containing N, as explained above, sometimes coarse nitrides are formed and a drop in the workability of the steel sheet is caused. Therefore, the N content is preferably 0.0100% or less. The N content may also be 0.0080% or less or 0.0050% or less.

The preferable basic chemical composition of the steel base material is as explained above. Furthermore, the steel base material may, in accordance with need, contain, in place of part of the balance of Fe, one or more elements selected from the group comprising Nb: 0 to 0.15%, Ti: 0 to 0.15%, V: 0 to 0.15%, Mo: 0 to 1.0%, Cr: 0 to 1.0%, Cu: 0 to 1.0%, Ni: 0 to 1.0%, B: 0 to 0.0100%, W: 0 to 1.000%, Hf: 0 to 0.050%, Mg: 0 to 0.050%, Zr: 0 to 0.050%, Ca: 0 to 0.010%, REM: 0 to 0.30%, and Ir: 0 to 1.000%. These elements may be respectively contained in 0.0001% or more, 0.0005% or more, 0.001% or more, or 0.01% or more.

In the steel base material, the balance besides the above elements is comprised of Fe and impurities. The "impurities" in the steel base material are constituents entering due to various factors in the production process, such as the ore, scrap, or other such raw materials, when industrially producing the steel base material.

The chemical composition of the steel base material may be measured by a general method of analysis. For example, the chemical composition of the steel base material may be measured by first mechanically grinding it to remove the plating layer, then applying ICP-AES (inductively coupled plasma-atomic emission spectrometry) to the cuttings based on JIS G 1201: 2014. Specifically, for example, it can be identified by taking a 35 mm square test piece from near the sheet thickness 1/2 position of the steel base material and measuring it by a ICPS-8100 made by Shimadzu, etc. (measurement device) under conditions based on calibration curves prepared in advance. Of the elements which cannot be measured by ICP-AES, C and S can be measured using the combustion-infrared absorption method, N using the inert gas melting-thermal conductivity method, and O using the inert gas melting-nondispersive infrared absorption method.

### [Sheet Thickness of Hot-Stamp Formed Body]

The sheet thickness of the hot-stamp formed body is not particularly limited, but is for example 0.2 mm or more and may also be 0.3 mm or more, 0.6 mm or more, 1.0 mm or more, or 2.0 mm or more. Similarly, the sheet thickness of the hot-stamp formed body is for example 6.0 mm or less and may also be 5.0 mm or less or 4.0 mm or less.

### <Method of Production of Hot-Stamp Formed Body>

Next, a preferable method of production of a hot-stamp formed body according to an embodiment of the present invention will be explained. The following explanation is intended to illustrate the characteristic method for production of a hot-stamp formed body according to an embodiment of the present invention and is not intended to limit the hot-stamp formed body to one produced by the method of production explained below:

The hot-stamp formed body according to an embodiment of the present invention can for example be produced by a casting step of casting molten steel adjusted in chemical composition to form a slab, a hot rolling step of hot rolling the slab to obtain a hot rolled steel sheet, a coiling step of coiling the hot rolled steel sheet, a cold rolling step of cold rolling the coiled hot rolled steel sheet to obtain a cold rolled steel sheet, an annealing step of annealing the cold rolled steel sheet, a cooling step of cooling the annealed cold rolled steel sheet, a plating step of forming a plating layer on the obtained steel base material, and a hot-stamp forming step of hot-stamp forming the obtained plated steel sheet. Alternatively, it is also possible not to coil up the sheet after the hot rolling, but pickle the sheet and perform the cold rolling step as it is. Below, the steps will be explained in detail.

### [Casting Step]

The conditions of the casting step are not particularly limited. For example, the casting may be performed by the method of smelting by a blast furnace, electric arc furnace, etc., then performing various types of secondary refining, then casting by usual continuous casting, ingot making, etc.

### [Hot Rolling Step]

The cast slab can be hot rolled to obtain a hot rolled steel sheet. The hot rolling step is performed by hot rolling the cast slab directly or after cooling once, then reheating. When performing the reheating, the heating temperature of the slab may, for example, be 1100 to 1250°C. In the hot rolling step, usually rough rolling and finish rolling are performed. The temperatures and rolling reductions of the rolling operations can be suitably determined in accordance with the desired microstructure or sheet thickness. For example, the end temperature of the finish rolling may be 900 to 1050°C and the rolling reduction of the finish rolling may be 10 to 50%.

### [Coiling Step]

The hot rolled steel sheet can be coiled at a predetermined temperature. The coiling temperature can be suitably determined in accordance with the desired microstructure, etc. For example, it may be 500 to 800°C. Before coiling or after coiling, then uncoiling, the hot rolled steel sheet may also be given predetermined heat treatment. Alternatively, the coiling step need not be performed. The sheet can be pickled after the hot rolling step, etc., then subjected to the later explained cold rolling step.

### [Cold Rolling Step]

After the hot rolled steel sheet is pickled, etc., the hot rolled steel sheet can be cold rolled to obtain a cold rolled steel sheet. The rolling reduction of the cold rolling can be suitably determined in accordance with the desired microstructure or sheet thickness. For example, it may be 20 to 80%. After the cold rolling, for example, the sheet may be air cooled to cool it down to room temperature.

### [Annealing Step]

Next, the obtained cold rolled steel sheet is annealed. The annealing step includes heating the cold rolled steel sheet in an atmosphere of a dew point of -50 to 20°C to a temperature of 730 to 900°C and holding it there for 10 to 300 seconds. In particular, by performing the annealing step under conditions of a relatively high dew point of -10 to 20°C, it is possible to suitably decarburize the surface layer part of the cold rolled steel sheet. In this case, while the reason is not necessarily clear, in the plating layer of the finally obtained hot-stamp formed body, it becomes possible to ensure the presence of Fe-Al-Si phases dispersed in the Fe₂ Al₅ phase. As a result, compared with the case of performing the annealing step under conditions of a dew point of less than -10°C, it becomes possible to reduce the value of ΣLᵢ /L₀ and further improve the corrosion resistance after hot-stamp forming. The atmosphere in the annealing step may be a reducing atmosphere, more specifically a reducing atmosphere containing nitrogen and hydrogen, for example, a reducing atmosphere containing 1 to 10% of hydrogen (for example, hydrogen 4% and a balance of nitrogen).

### [Cooling Step]

The cooling step may be performed by a cooling speed suitable for obtaining the desired microstructure from the heating temperature of the annealing step to the dipping temperature of the next plating step. While not particularly limited, for example, the cooling step may be performed by an average cooling speed of 10°C/s or more from the heating temperature of the annealing step down to the dipping temperature of the plating step.

### [Plating Step]

Next, in the plating step, at least one surface, preferably both, of the cold rolled steel sheet (steel base material) is formed with a plating layer. More specifically, the plating step is performed using a plating bath having a predetermined chemical composition, for example, a plating bath containing Zn: 5.0 to 50.0%, Si: 0.1 to 18.0%, and a balance of Al and impurities (plating bath temperature: 650°C or more, for example, 650 to 680°C) so that the dipping temperature of the steel base material in the plating bath becomes 500°C or less, then the sheet is cooled down to 300°C by an average cooling speed of 10°C/s or less. The plating step is important for obtaining the desired chemical composition and form of the Fe-Al phase corresponding to the interfacial alloy layer formed at the interface of the steel base material and will be explained in detail below:

In general, the plating step is performed so that the dipping temperature becomes the same or the same extent as the plating bath temperature. However, if the difference between the dipping temperature of the steel base material in the plating bath and the plating bath temperature (i.e., plating bath temperature-dipping temperature) is less than 150°C, if the dipping temperature is higher than 500°C, or the plating bath temperature is lower than 650°C, an Fe-Al phase of a suitable phase type can no longer be formed. Specifically, in these cases, the Si content of the Fe-Al phase becomes less than 3.0% and similarly the Zn content becomes less than 2.0%. As a result, if such a plated steel sheet is subjected to high temperature heating (of the hot-stamp forming), during that high temperature heating, formation of the Fe-Al-Si phases in the Fe₂ Al₅ phase cannot be sufficiently suppressed and the value of ΣLᵢ /L₀ becomes larger and/or the Zn with its sacrificial corrosion preventive action can no longer be made to sufficiently dissolve in the Fe-Al phase formed on the Fe₂ Al₅ phase and having an Fe content of 20 to 40 mass%. For this reason, the corrosion resistance of the plating layer after hot-stamp forming greatly falls. Therefore, in the present method of production, by controlling the plating bath temperature to 650°C or more and the dipping temperature to 500°C or less to reliably make the dipping temperature 150°C or more lower than the plating bath temperature, the interfacial alloy layer (Fe-Al phase) is made to crystallize at a low temperature and the phase type is made to change to one suitable for including Si in 3.0 mass% or more and Zn in 2.0 mass% or more in that interfacial alloy layer. It may be that by including Si in 3.0 mass% or more in the interfacial alloy layer, much of the Si present in the plating layer for hot-stamp forming can be trapped in that interfacial alloy layer. The Fe-Al-Si phases after the hot-stamp forming are an intermetallic compound containing a relatively large amount of Si, therefore it may be that by trapping much of the Si in the interfacial alloy layer before hot-stamp forming, it becomes possible to suppress the formation of Fe-Al-Si phases in the Fe₂ Al₅ phase at the time of high temperature heating in the hot-stamp forming. As a result, it may be that the production of a hot-stamp formed body with Fe-Al-Si phases dispersed in the Fe₂ Al₅ phase so that ΣLᵢ /L₀ ≤0.70 becomes possible. Further, by making Zn be included in 2.0 mass% in the interfacial alloy layer, it is possible to make Zn with its sacrificial corrosion preventive action dissolve in the Fe-Al phase having an Fe content of 20 to 40 mass% formed by alloying at the time of high temperature heating in hot-stamp forming and thereby becomes possible to improve the plating layer after hot-stamp forming.

In general, the dipping temperature, as stated earlier, is controlled to be the same as or the same extent as the plating bath temperature. Even if the dipping temperature is different from the plating bath temperature, the dipping temperature is generally controlled to within a range of ±20°C with respect the plating bath temperature. As the reason for this, the fact that there is no need to go to the trouble of spending on production to cool and control the dipping temperature to a lower temperature despite the sheet temperature rising to the plating bath temperature at the time of dipping in the plating bath, the fact that sometimes the plating bath solidifies due to the dipping temperature being lower than the plating bath temperature, etc., may be mentioned. Therefore, the fact that, like in the present method of production, it is possible to control the plating bath temperature to 650°C or more and the dipping temperature to 500°C or less so as to reliably make the dipping temperature become 150°C or more lower than the plating bath temperature to thereby improve the corrosion resistance of the plating layer after hot-stamp forming is extremely unexpected and, further, surprising. The lower limit of the dipping temperature is not particularly prescribed, but, for example, the dipping temperature of the steel base material in the plating bath may be 380°C or more. Note that, in conventional thinking, it is believed that by controlling the dipping temperature to 500°C or less, there would be a possibility of the plating bath solidifying due to the composition of the plating bath. However, in the present embodiment, it was discovered that by making the difference between the dipping temperature and the plating bath temperature larger than the conventional thinking at 150°C or more, that is, by making the dipping temperature 500°C or less and making the plating bath temperature a high temperature of 650°C, etc., it is possible to prevent solidification of the plating bath. Note that, to prevent solidification of the plating bath, it is preferable to make the liquid plating circulate by stirring it in the plating bath.

The plating step is, for example, performed by hot dip coating. The other conditions of the plating step may be suitably set considering the thickness and amount of deposition, etc., of the plating layer. For example, by dipping the cold rolled steel sheet in a plating bath, then pulling it up and using gas wiping to immediately blow N₂ gas or air, then cool it, it is possible to adjust the amount of deposition of the plating layer to within a predetermined range, for example, to within a range of 20 to 200 g/m² per side.

### [Cooling After Plating]

The post-plating cooling is, as explained above, performed down to 300°C by an average cooling speed of 10°C/s or less. By cooling the steel sheet after plating by such a relatively slow average cooling speed, it is possible to decrease the frequency of formation of nuclei of the Fe-Al phase from the plating in the molten state (frequency of nucleation). In this case, it is possible to make the Fe-Al phase grow relatively slowly, therefore it becomes possible to make the Fe-Al phase coarser to form an interfacial alloy layer having a relatively flat shape with little roughness at the interface with the steel base material.

In relation to this, to obtain to desired characteristics in the plating layer after hot-stamp forming, the inventors discovered that it is important to control the roughness of the interfacial alloy layer before hot-stamp forming to a flatter shape. At the time of high temperature heating of hot-stamp forming, along with alloying of the plating layer and steel base material, the interfacial alloy layer grows inside the plating layer. Therefore, if the degree of roughness of the interfacial alloy layer is large, at the time of high temperature heating of hot-stamp forming, the Fe-Al phase grows from the interfacial alloy layer inside the plating layer in needle shapes and sometimes the Fe-Al phase grown in needle shapes pierces the surface of the plating layer. The plating layer according to an embodiment of the present invention contains a relatively large amount of Al, therefore the surface is covered by an oxide film formed by Al-containing oxides, etc. However, sometimes the Fe-Al phase grown in needle shapes at the time of high temperature heating in hot-stamp forming breaks this oxide film. In such a case, the Zn contained in the plating layer evaporates from the parts where oxide film was broken. Zn has a relatively low boiling point of about 907°C, therefore there is the problem of easy evaporation at the time of heating at about 900°C or a temperature higher than that in the hot-stamp forming. By the surface of the plating layer being covered by an oxide film comprised of Al-containing oxides, etc., even after hot-stamp forming, it is possible to suppress or reduce the evaporation of Zn in the plating layer. However, if the oxide film is broken, Zn remarkably evaporates from the parts where the oxide film breaks. For this reason, the Zn content of the overall plating layer after hot-stamp forming and the amount of dissolved Zn in the Fe-Al phase having the Fe content of 20 to 40 mass% fall and the Zn content of the Fe-Al phase becomes less than 1.5 mass%. As a result, the corrosion resistance of the hot-stamp formed body falls.

As opposed to this, by controlling the average cooling speed from after plating to 300°C to 10°C/s or less, as explained above, it is possible to lower the frequency of formation of nuclei of the Fe-Al phase from the molten state plating (nucleation frequency) and make the Fe-Al phase grow relatively slowly. For this reason, it becomes possible to make the Fe-Al phase coarsen and form an interfacial alloy layer having a relatively flat shape with little roughness at the interface with the steel base material. Therefore, at the time of high temperature heating in hot-stamp forming, it is possible to keep the Fe-Al phase from growing in needle shapes from the interfacial alloy layer. As a result, it is possible to keep the oxide film present at the surface of the plating layer from being broken or possible to keep the breakage of such an oxide film to the minimum, therefore it becomes possible to remarkably suppress or reduce the evaporation of the Zn in the plating layer.

Due to this, it becomes possible to control the Zn content of the Fe-Al phase having an Fe content of 20 to 40 mass% at the plating layer after hot-stamp forming to 1.5 to 15.0 mass%. On the other hand, if the average cooling speed from after plating to 300°C becomes faster than 10°C/s, the nucleation frequency of the Fe-Al phase also becomes higher, therefore along with this, the growth of the Fe-Al phase from plating in the molten state becomes faster. If the growth of the Fe-Al phase becomes faster, an interfacial alloy layer with a larger roughness is formed at the interface of the steel base material. In relation to this, at the time of high temperature heating of the hot-stamp forming, an Fe-Al phase sometimes grows in needle shapes from the interfacial alloy layer and breaks the oxide film present at the surface of the plating layer. In such a case, the Zn contained in the plating layer evaporates from the parts where the oxide film was broken. As a result, at the plating layer after hot-stamp forming, the Zn content of the Fe-Al phase having the Fe content of 20 to 40 mass% ends becoming less than 1.5 mass% and the corrosion resistance of the hot-stamp formed body falls. To make the roughness of the interfacial alloy layer before hot-stamp forming flatter in shape, the average cooling speed from after plating to 300°C is preferably made 5°C/s or less.

### [Hot-Stamp Forming Step]

Finally, the obtained plated steel sheet is hot stamp formed in the hot-stamp forming step to produce a hot-stamp formed body containing the desired plating layer. From the viewpoint of obtaining the desired plating layer, preferably the plated steel sheet is loaded into a furnace of 800 to 1000°C, then, after the temperature of the plated steel sheet reaches a predetermined temperature, for example, 900°C, is held in the furnace for 5 to 50 seconds. If the holding time becomes 50 seconds or more, alloying of the plating layer progresses too much and sometimes an Fe-Al phase having a relatively low Fe content can no longer be sufficiently formed. The heating atmosphere is not particularly limited and may be normal conditions. For example, it may be the atmosphere, a gas burning atmosphere controlling the ratio of air and fuel, or a nitrogen atmosphere. The dew point in these gases may be controlled. As the heating method, for example, ohmic heating, high frequency heating, induction heating, etc., may be mentioned. After heating and holding in a furnace, the plated steel sheet is taken out from the furnace. Then, after the plated steel sheet reaches a predetermined temperature, for example, a predetermined temperature of 850°C or less, it can be hot stamp formed under the usual conditions. After the hot-stamp forming, while not particularly limited, for example, the formed body may be cooled in a temperature region of for example 250°C or less by an average cooling speed of 20°C/s or more.

According to the present method of production, it possible to form a hot-stamp formed body provided with a plating layer in which the chemical composition of the overall plating layer is controlled to within a predetermined range, the amount of deposition of the plating layer is 20 g/m² or more per side, Fe-Al-Si phases in the Fe₂ Al₅ phase formed at the steel base material side are dispersed satisfying ΣLᵢ /L₀ ≤0.70, and the Zn content of the Fe-Al phase formed at the surface side is 1.5 to 15.0 mass%. Therefore, by combination of the effect of suppression of progression of corrosion obtained by the formation of Fe-Al-Si phases dispersed in the Fe₂ Al₅ phase and the effect or improvement the corrosion resistance obtained by dissolution of Zn in the Fe-Al phase, it becomes possible to remarkably improve the corrosion resistance of a hot-stamp formed body. Therefore, according to such a hot-stamp formed body, it becomes possible to realize excellent corrosion resistance compared with a conventional hot-stamp formed body. For this reason, it is possible to contribute to the development of industry through longer service life in automobile and building material applications.

Below, examples will be used to explain the present invention in more detail, but the following examples are merely illustrations of the present invention. The present invention is not limited to these examples in any way. The present invention can be freely changed within a scope not deviating from the gist of the present invention needless to say.

### EXAMPLES

In the following examples, hot-stamp formed bodies according to embodiments of the present invention were produced under various conditions and the properties of the produced hot-stamp formed bodies were investigated.

First, in each case, molten steel was cast by continuous casting to form a slab having a chemical composition comprising, by mass%, C: 0.20%, Si: 0.012%, Mn: 1.30%, Al: 0.030%, P: 0.005%, S: 0.0020% and N: 0.0030% and having a balance of Fe and impurities, cooling the slab once, then reheating it to 1200°C and hot rolling it, then coiling it at a temperature of 600°C or less. The hot rolling was performed by performing rough rolling and finish rolling. The end temperature of the finish rolling was 900 to 1050°C and the rolling reduction of the finish rolling was 30%. Next, the obtained hot rolled steel sheet was pickled, then was cold rolled by a rolling reduction of 50% to obtain a cold rolled steel sheet having a sheet thickness of 1.6 mm. Next, the obtained cold rolled steel sheet was subjected to an annealing step in a mixed gas atmosphere of 4% hydrogen and a balance of nitrogen in a furnace having an oxygen concentration of 20 ppm or less under the conditions shown in Table 1, then was cooled by an average cooling speed of 10°C/s or more to produce a steel base material.

Next, the produced steel base material was cut to 100 mm×200 mm and a batch type hot dip coating test apparatus made by the assignee company was used to plate the steel base material. More specifically, first, the produced steel base material was introduced into a plating bath having various chemical compositions and the plating bath temperature shown in Table 1 at the dipping temperature shown in Table 1 for about 3 seconds, then this was pulled up by a pullup speed of 20 to 200 mm/s and adjusted in amount of deposition of the plating layer by N₂ gas wiping to the value shown in Table 1. Next, the steel base material with the plating layer deposited on it was cooled using nitrogen gas as a cooling gas down to 300°C by the average cooling speed shown in Table 1 to thereby obtain a plated steel sheet formed with the plating layer at both sides of the steel base material. The sheet temperature was measured using a thermocouple spot welded to the center part of the steel base material.

### [Analysis of Chemical Composition of Plating Layer Etc.]

The chemical composition of the plating layer after hot-stamp forming was determined in the following way. First, the plated steel sheet was heated by ohmic heating. After the temperature of the plated steel sheet reached 900°C, it was held for 10 seconds. Next, the plated steel sheet was taken out from the furnace. The plated steel sheet was clamped between plate dies at a temperature of about room temperature to rapidly cool it and obtain a hot-stamp formed body having, in order from the steel base material side, an Fe₂ Al₅ phase and an Fe-Al phase having an Fe content of 20 to 40 mass%. After heating and rapid cooling, the hot-stamp formed body was cut to 30 mm×30 mm. The plating layer of the obtained sample was dissolved in an acidic aqueous solution of room temperature comprised of 10% hydrochloric acid to which 0.04% of ibit 710K (made by Asahi Chemical Industry Co., Ltd.) The obtained acidic solution was measured by ICP atomic emission spectrometry to determine the chemical composition of the plating layer. Further, the masses of the sample before and after pickling and peeling were measured. The amount of deposition of the plating layer was determined from the change of the mass. The results are shown in Table 1.

### [Structural Analysis of Plating Layer]

Using the above-mentioned method, an Fe₂ Al₅ phase, an Fe-Al phase having an Fe content of 20 to 40 mass%, and Fe-Al-Si phases with an Si content of 5 to 20 mass% and a circular equivalent diameter of 2 µm or more were identified. In the Fe-Al phase, similarly the above-mentioned method was used to determine the Zn content. Further, the above-mentioned method was used to determine the value of ΣLᵢ /L₀ . Note that except for an example with no Fe-Al phase containing an Fe content of 20 to 40 mass% (specifically, Comparative Example 37), in order from side of the steel base material, there were an Fe₂ Al₅ phase and an Fe-Al phase having an Fe content of 20 to 40 mass% present.

### [Red Rust Resistance]

The red rust resistance was evaluated in the following way: First, the plated steel sheet was heated by ohmic heating. After the temperature of the plated steel sheet reached 900°C, it was held there for 10 seconds. Next, the plated steel sheet was taken out from the furnace. The plated steel sheet was sandwiched between plate dies at a temperature of about room temperature and rapidly cooled. After heating and rapid cooling, a 50 mm×100 mm sample of the hot-stamp formed body was treated by Zn phosphate (SD5350 System: standard of Nippon Paint Industrial Coating), then was painted by electrodeposition (PN1 10 Powernics Gray: standard of Nippon Paint Industrial Coating) to 20 µm and was baked at a temperature of 150°C and 20 minutes. Next, a cut was made at the center of the sample reaching the base iron (steel base material). Next, a neutral salt spray cycle test prescribed in JIS H 8502: 1999, 8.1 was performed to measure the number of cycles at which red rust was formed from the cut part. The corrosion resistance was evaluated in the following way.
AA: more than 10 cycles
A: 3 to 10 cycles
B: less than 3 cycles

### [Paint Blistering]

Paint blistering was evaluated as follows: First, a 50 mm×100 mm sample of a hot-stamp formed body heated and rapidly cooled in the same way as the red rust resistance was treated by Zn phosphate (SD5350 System: standard of Nippon Paint Industrial Coating), then was painted by electrodeposition (PN110 Powernics Gray: standard of Nippon Paint Industrial Coating) to 20 µm and was baked at a temperature of 150°C and 20 minutes. Next, a cut was made at the center of the sample reaching the base iron (steel base material). Next, a neutral salt spray cycle test prescribed in JIS H 8502: 1999, 8.1 was performed for 120 cycles to measure the paint blister width. The corrosion resistance was evaluated in the following way.
AAA: 2 mm or less
AA: more than 2 to 3 mm
A: more than 3 to 4 mm
B: more than 4 mm

A case where the red rust resistance is evaluated as AA and A and the paint blistering is evaluated as AAA, AA, and A was evaluated as a hot-stamp formed body provided with an Al-containing plating layer having improved corrosion resistance even after hot-stamp forming. The results are shown in Table 1.

### [Table 1-1]

**Table 1-1**

| No. | Class | Plating laver | | | | | | | | |
|---|---|---|---|---|---|---|---|---|---|---|
| | | Chemical composition (mass%) | | | | | | | | Amount of deposition (g/m²) |
| | | Al | Zn | Si | Fe | Other elements | | | | |
| | | | | | | Element 1 | mass% | Element 2 | mass% | |
| 1 | Ex. | Bal. | 4.3 | 0.1 | 39.0 | | | | | 20 |
| 2 | Ex. | Bal. | 4.4 | 0.1 | 38.0 | | | | | 40 |
| 3 | Ex. | Bal. | 14.6 | 3.7 | 37.0 | Ti | 0.003 | | | 60 |
| 4 | Ex. | Bal. | 20.4 | 6.8 | 35.0 | Y | 0.002 | In | 0.001 | 60 |
| 5 | Ex. | Bal. | 29.8 | 11.2 | 26.0 | Cu | 0.001 | | | 150 |
| 6 | Ex. | Bal. | 6.8 | 0.3 | 35.0 | Mg | 0.001 | | | 60 |
| 7 | Ex. | Bal. | 6.7 | 2.0 | 36.0 | | | | | 60 |
| 8 | Ex. | Bal. | 6.9 | 2.1 | 34.0 | Mo | 0.001 | Cr | 0.041 | 60 |
| 9 | Ex. | Bal. | 6.9 | 2.1 | 34.0 | Mn | 0.021 | | | 60 |
| 10 | Ex. | Bal. | 13.8 | 2.1 | 34.0 | Ag | 0.004 | | | 60 |
| 11 | Ex. | Bal. | 13.6 | 2.0 | 35.0 | | | | | 60 |
| 12 | Ex. | Bal. | 13.4 | 2.0 | 36.0 | | | | | 60 |
| 13 | Ex. | Bal. | 13.0 | 2.0 | 38.0 | Co | 0.001 | | | 60 |
| 14 | Ex. | Bal. | 16.5 | 2.0 | 37.0 | Ca | 0.001 | Pb | 0.003 | 60 |
| 15 | Ex. | Bal. | 17.5 | 2.1 | 33.0 | Zr | 0.0001 | | | 60 |
| 16 | Ex. | Bal. | 17.3 | 2.1 | 34.0 | | | | | 60 |
| 17 | Ex. | Bal. | 17.5 | 2.1 | 33.0 | Ni | 0.007 | | | 60 |
| 18 | Ex. | Bal. | 17.0 | 2.0 | 35.0 | | | | | 60 |
| 19 | Ex. | Bal. | 16.8 | 2.0 | 36.0 | P | 0.003 | Bi | 0.001 | 60 |
| 20 | Ex. | Bal. | 24.2 | 4.1 | 34.0 | | | | | 60 |
| 21 | Ex. | Bal. | 24.5 | 4.2 | 33.0 | B | 0.006 | | | 60 |
| 22 | Ex. | Bal. | 13.6 | 2.0 | 35.0 | Sr | 0.007 | | | 60 |
| 23 | Ex. | Bal. | 13.6 | 2.0 | 35.0 | | | | | 60 |
| 24 | Ex. | Bal. | 17.3 | 2.1 | 34.0 | Ce | 0.003 | | | 60 |
| 25 | Ex. | Bal. | 17.0 | 2.0 | 35.0 | Li | 0.007 | | | 60 |
| 26 | Ex. | Bal. | 17.5 | 4.2 | 33.0 | | | | | 60 |
| 27 | Ex. | Bal. | 14.4 | 2.2 | 31.0 | | | | | 60 |
| 28 | Ex. | Bal. | 14.0 | 2.1 | 33.0 | | | | | 60 |
| 29 | Ex. | Bal. | 17.0 | 2.0 | 35.0 | La | 0.002 | W | 0.0001 | 60 |
| 30 | Ex. | Bal. | 16.8 | 2.0 | 36.0 | Sn | 0.013 | Nb | 0.003 | 60 |
| 31 | Ex. | Bal. | 17.5 | 4.2 | 33.0 | Sb | 0.005 | | | 60 |
| 32 | Comp. Ex. | Bal. | 3.5 | 0.1 | 33.0 | | | | | 60 |
| 33 | Comp. Ex. | Bal. | 3.4 | 0.1 | 35.0 | | | | | 60 |
| 34 | Comp. Ex. | Bal. | 0.3 | 0.1 | 34.0 | | | | | 60 |
| 35 | Comp. Ex. | Bal. | 3.5 | 15.1 | 33.0 | | | | | 60 |
| 36 | Comp. Ex. | Bal. | 3.5 | 0.04 | 33.0 | | | | | 60 |
| 37 | Comp. Ex. | Bal. | 2.6 | 0.1 | 69.0 | | | | | 19 |
| 38 | Comp. Ex. | - | - | - | - | - | - | - | - | - |

### [Table 1-2]

**Table 1-2**

| No. | Class | Production conditions | | | | | | Plating structure | | Results of evaluation | |
|---|---|---|---|---|---|---|---|---|---|---|---|
| | | Annealing step | | | Plating step | | | Zn content of Fe-Al phase (mas%) | ∑Lᵢ/L₀ | Red rust resistance | Paint blistering |
| | | Dew point (°C) | Temp. (°C) | Time (s) | Plating bath temp. (°C) | Dipping temp. (°C) | Average cooling speed after plating to 300°C (°C/s) | | | | |
| 1 | Ex. | -50 | 800 | 100 | 660 | 500 | 10 | 1.6 | 0.53 | A | A |
| 2 | Ex. | -50 | 800 | 100 | 660 | 500 | 10 | 1.5 | 0.50 | A | A |
| 3 | Ex. | -50 | 800 | 100 | 660 | 490 | 10 | 1.6 | 0.57 | A | A |
| 4 | Ex. | -50 | 800 | 100 | 660 | 450 | 10 | 2.6 | 0.61 | A | A |
| 5 | Ex. | -50 | 800 | 100 | 660 | 400 | 10 | 2.9 | 0.70 | A | A |
| 6 | Ex. | -50 | 800 | 100 | 660 | 500 | 5 | 3.0 | 0.50 | AA | AA |
| 7 | Ex. | -50 | 800 | 100 | 660 | 500 | 5 | 3.6 | 0.55 | AA | AA |
| 8 | Ex. | -50 | 800 | 100 | 660 | 500 | 5 | 3.4 | 0.56 | AA | AA |
| 9 | Ex. | -50 | 800 | 100 | 660 | 500 | 5 | 3.4 | 0.61 | AA | AA |
| 10 | Ex. | -50 | 800 | 100 | 660 | 450 | 5 | 5.0 | 0.60 | AA | AA |
| 11 | Ex. | -50 | 800 | 100 | 660 | 450 | 5 | 5.1 | 0.59 | AA | AA |
| 12 | Ex. | -50 | 800 | 100 | 660 | 450 | 5 | 5.0 | 0.61 | AA | AA |
| 13 | Ex. | -50 | 800 | 100 | 660 | 450 | 5 | 5.3 | 0.62 | AA | AA |
| 14 | Ex. | -50 | 800 | 100 | 660 | 450 | 5 | 6.3 | 0.60 | AA | AA |
| 15 | Ex. | -50 | 800 | 100 | 660 | 450 | 5 | 6.5 | 0.59 | AA | AA |
| 16 | Ex. | -50 | 800 | 100 | 660 | 400 | 5 | 6.2 | 0.54 | AA | AA |
| 17 | Ex. | -50 | 800 | 100 | 660 | 400 | 5 | 6.1 | 0.57 | AA | AA |
| 18 | Ex. | -50 | 800 | 100 | 660 | 400 | 5 | 7.1 | 0.57 | AA | AA |
| 19 | Ex. | -50 | 800 | 100 | 660 | 400 | 5 | 8.0 | 0.56 | AA | AA |
| 20 | Ex. | -50 | 800 | 100 | 660 | 400 | 5 | 8.4 | 0.65 | AA | AA |
| 21 | Ex. | -50 | 800 | 100 | 660 | 400 | 5 | 15.0 | 0.70 | AA | AA |
| 22 | Ex. | -10 | 800 | 100 | 660 | 500 | 10 | 2.3 | 0.22 | A | AA |
| 23 | Ex. | -10 | 800 | 100 | 660 | 500 | 10 | 2.6 | 0.33 | A | AA |
| 24 | Ex. | 0 | 800 | 100 | 660 | 500 | 10 | 2.8 | 0.36 | A | AA |
| 25 | Ex. | 0 | 800 | 100 | 660 | 500 | 10 | 2.9 | 0.30 | A | AA |
| 26 | Ex. | 10 | 800 | 100 | 660 | 500 | 10 | 2.9 | 0.50 | A | AA |
| 27 | Ex. | -10 | 800 | 100 | 660 | 500 | 5 | 6.9 | 0.20 | AA | AAA |
| 28 | Ex. | -10 | 800 | 100 | 660 | 500 | 5 | 7.4 | 0.34 | AA | AAA |
| 29 | Ex. | 0 | 800 | 100 | 660 | 500 | 5 | 8.1 | 0.30 | AA | AAA |
| 30 | Ex. | 0 | 800 | 100 | 660 | 500 | 5 | 8.4 | 0.33 | AA | AAA |
| 31 | Ex. | 10 | 800 | 100 | 660 | 500 | 5 | 8.7 | 0.47 | AA | AAA |
| 32 | Comp. Ex. | -50 | 800 | 100 | 660 | 520 | 10 | 1.5 | 0.71 | B | B |
| 33 | Comp. Ex. | -50 | 800 | 100 | 660 | 500 | 20 | 1.4 | 0.60 | B | B |
| 34 | Comp. Ex. | -50 | 800 | 100 | 660 | 500 | 10 | 1.4 | 0.54 | B | A |
| 35 | Comp. Ex. | -50 | 800 | 100 | 660 | 500 | 10 | 1.7 | 0.80 | A | B |
| 36 | Comp. Ex. | -50 | 800 | 100 | 660 | 500 | 10 | 1.6 | 0.60 | B | B |
| 37 | Comp. Ex. | -50 | 800 | 100 | 660 | 500 | 10 | - | 0.61 | B | B |
| 38 | Comp. Ex. | -50 | 800 | 100 | 530 | 500 | - | - | - | - | - |

Referring to Table 1, in Comparative Example 32, the dipping temperature of the plating step was high, therefore it may be the desired Si content was not obtained in the interfacial alloy layer in the plating layer before hot-stamp forming. As a result, in the plating layer after hot-stamp forming, Fe-Al-Si phases remarkably formed in the Fe₂ Al₅ phase, the value of ΣLᵢ /L₀ became larger, and corrosion resistance after hot-stamp forming fell. In Comparative Example 33, the average cooling speed from after plating to 300°C was fast, therefore it may be that the frequency of formation of nuclei of the Fe-Al phase from the plating in the molten state and at the interface with the steel base material an interfacial alloy layer larger that the roughness was formed. In relation to this, due to the Fe-Al phase, grown in needle shapes at the time of high temperature heating in the hot-stamp forming, it may be that the oxide film at the plating layer surface was broken and much of the Zn contained in the plating layer evaporated. As a result, the Zn content of the Fe-Al phase fell and the corrosion resistance after hot-stamp forming fell. In Comparative Example 34, the Zn content in the plating layer was low, therefore the Zn content of the Fe-Al phase also fell and it was not possible to sufficiently realize the sacrificial corrosion preventive action at the plating layer. As a result, after hot-stamp forming, the red rust resistance fell. In Comparative Example 35, the Si content in the plating layer was high and Fe-Al-Si phases remarkably formed whereby the value of ∑ Lᵢ / L₀ became larger and the corrosion resistance after hot-stamp forming fell. In Comparative Example 36, the Si content in the plating layer was low, therefore the adhesion of the plating layer fell and the corrosion resistance after hot-stamp forming fell. In Comparative Example 37, the amount of deposition of the plating layer was not sufficient, therefore the alloying of the plating layer proceeded too much at the time of high temperature heating at the hot-stamp forming and it was not possible to form an Fe-Al phase having an Fe content of 20 to 40 mass%. As a result, the effect of improvement of the corrosion resistance due to the dissolution of Zn in the Fe-Al phase cannot be obtained and the corrosion resistance after hot-stamp forming fell. In Comparative Example 38, the plating bath temperature was low, therefore the plating bath solidified when dipping the steel base material in the plating bath and the plating layer could not be suitably formed. For this reason, subsequent production was stopped and analysis and evaluation of performance were not performed.

In contrast to this, in each of the hot-stamp formed bodies according to all of the examples, by controlling the chemical composition of the plating layer to within a predetermined range and making the amount of deposition of the plating layer 20 g/m² or more per side and by making Fe-Al-Si phases in the Fe₂ Al₅ phase formed at the steel base material side disperse so as to satisfy ΣLᵢ/L₀ ≤0.70 and further controlling the Zn content of the Fe-Al phase formed at the surface side to 1.5 to 15.0 mass%, by combination of the effect of suppression of progression of corrosion obtained by formation by diffusion of the Fe-Al-Si phases in the Fe₂ Al₅ phase even after being exposed to a high temperature of 900°C and the effect of improvement of the corrosion resistance obtained by making Zn dissolve in the Fe-Al phase, it was possible to remarkably improve the corrosion resistance of the hot-stamp formed body. Further, in each of the plated steel sheets before hot-stamp forming according to all of the examples, when measuring the cross-section of the plating layer for elemental concentration by EPMA, the Si content in the interfacial alloy layer was higher than Comparative Example 32, in each case, 3.0 mass% or more, and similarly the Zn content was in each case 2.0 mass% or more. Further, in each of the plated steel sheets before hot-stamp forming according to all of the examples, when identifying the interfacial alloy layer from the elemental distribution mapping obtained using EPMA, the shape of the interfacial alloy layer had a flatter shape with less roughness compared with Comparative Example 33. In particular, in each of Examples 27 to 31 controlled to have a chemical composition of the overall plating layer containing Zn: 5.0 to 35.0% and Si: 0.25 to 6.0%, have a Zn content of the Fe-Al phase of 3.0 to 15.0 mass%, and satisfy the relationship of ΣLᵢ /L₀ ≤0.50, the red rust resistance was evaluated as AA, the paint blistering became evaluated as AAA, and the corrosion resistance could be improved much more. Further, when measuring the hot-stamp formed bodies by GDS, the inventors confirmed the presence of a solid solution layer containing an Fe-Al solid solution layer, Fe-Zn solid solution layer, and/or Fe-Al-Zn solid solution layer between the steel base material and the plating layer in the hot-stamp formed bodies of all of the examples.

### REFERENCE SIGNS LIST

1 hot-stamp formed body
2 steel base material
3 plating layer
4 Fe₂ Al₅ phase
5 Fe-Al phase having Fe content of 20 to 40 mass% phase
6 Fe-Al-Si phases with Si content of 5 to 20 mass% and circle equivalent diameter of 2 µm or more

## Claims

1. A hot-stamp formed body comprising a steel base material and a plating layer arranged on a surface of the steel base material, wherein
a chemical composition of the plating layer comprises, by mass%,
Zn: 2.5 to 40.0%,
Si: 0.05 to 15.0%,
Fe: 25.0 to 40.0%,
Ni: 0 to 0.500%,
Mg: 0 to 3.000%,
Ca: 0 to 3.000%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%,
W: 0 to 0.500%, and
balance: Al and impurities, and
a total content of Ni, Mg, Ca, Sb, Pb, Cu, Sn, Ti, Cr, Nb, Zr, Mn, Mo, Ag, Li, La, Ce, B, Y, Sr, In, Co, Bi, P, and W is 5.000% or less,
the plating layer includes, in order from the side of the steel base material, an Fe₂ Al₅ phase and a Fe-Al phase having an Fe content of 20 to 40 mass%,
a Zn content of the Fe-Al phase is 1.5 to 15.0 mass%,
at a cross-section of the plating layer, an Si content in the Fe₂ Al₅ phase is 5 to 20 mass% and projected lengths Li of Fe-Al-Si phases with a circle equivalent diameter of 2 µm or more and a length L₀ of the surface of the steel base material satisfy ΣLᵢ /L₀ ≤0.70, and
an amount of deposition of the plating layer is 20 g/m² or more per side.

2. A hot-stamp formed body according to claim 1, wherein the chemical composition of the plating layer comprises, by mass%,
Zn: 5.0 to 35.0%, and
Si: 0.25 to 6.0%, and
the Zn content of the Fe-Al phase is 3.0 to 15.0 mass%.

3. A hot-stamp formed body according to claim 1 or 2, wherein ΣLᵢ /L₀ ≤0.50.
